# EUROPEAN PATENT APPLICATION

(11) **EP 4 528 959 A1**
(43) Date of publication of application: **26.03.2025**
(21) Application number: 23862532.1
(22) Date of filing: 08.09.2023
(51) Int. Cl.: H02J 3/06, H02J 3/12, H02J 3/01, H02H 7/26, H02M 5/12, H02M 5/18, H02M 5/293, H02P 13/06, H01F 38/00, H01F 27/28, H01F 27/29, H01F 27/40, H01F 29/02

(54) **POWER SUPPLY TIE TRANSFORMER, AND REGULATION AND CONTROL METHOD THEREFOR**

(30) Priority: 08.09.2022 CN 202211092917
(71) Applicant: State Grid Smart Grid Research Institute Co., Ltd., Beijing 102209 (CN)
(72) Inventor: MU, Xiaobin, Beijing 102209 (CN); CHEN, Guofu, Beijing 102209 (CN); WANG, Xiang, Beijing 102209 (CN); ZHAO, Guoliang, Beijing 102209 (CN); LI, Weiguo, Beijing 102209 (CN); DAI, Fengjiao, Beijing 102209 (CN); YUAN, Peie, Beijing 102209 (CN); YUAN, Yalei, Beijing 102209 (CN); GU, Weiming, Beijing 102209 (CN); WANG, Zhikai, Beijing 102209 (CN); LI, Honghao, Beijing 102209 (CN); DING, Changxin, Beijing 102209 (CN); ZHANG, Lu, Beijing 102209 (CN)
(74) Representative: Mathys & Squire
(86) International application number: PCT/CN2023/117856
(87) International publication number: WO 2024/051839

(57) **Abstract**

The present application discloses a power supply tie transformer, and a regulation and control method therefor. The power supply tie transformer comprises: a multi-phase parallel transformer, a multi-phase series transformer, and a plurality of safety protection auxiliary adjusting devices. Head terminals of the primary side of the multi-phase parallel transformer are all connected to a first line; the secondary side of the parallel transformer is provided with at least one power supply winding and a plurality of asymmetric windings; the power supply winding is connected to a power supply end; the plurality of asymmetric windings are respectively interconnected to the adjacent phase asymmetric windings of the secondary side of the parallel transformer by means of switch bridge arm modules respectively corresponding to the plurality of asymmetric windings to obtain a first electrical quantity; the first electrical quantity is coupled to the primary side of the series transformer by means of the secondary side of the corresponding series transformer; the plurality of safety protection auxiliary adjusting devices are connected in series between the first line and a second line. The present application realizes transmission of electric energy of a first line and a second line to a power supply end, ties the first line and the second line, and realizes mutual electric energy transmission at specified power between the first line and the second line.

## Description

### CROSS-REFERENCE TO RELATED APPLICATION

The application is filed based upon and claims priority to Chinese Patent Application No. 202211092917.X, filed on September 08, 2022 and entitled "POWER SUPPLY TIE TRANSFORMER, AND REGULATION AND CONTROL METHOD THEREFOR", the entire content of which is hereby incorporated by reference in its entirety.

### TECHNICAL FIELD

The present disclosure relates to the technical field of power systems, and in particular, to an interconnecting power supply transformer and a method for controlling the interconnecting power supply transformer.

### BACKGROUND

A power grid is taken as a foundational bearing network for various energy sources. A safe, stable and reliable operation of the power grid directly affects an acceptance of a new energy and a power supply quality for users. In our country, a distribution power grid mainly operates in a "closed-loop design, open-loop operation" mode. Facing the large-scale integration of distributed new energy generation, due to its randomness, intermittence and strong fluctuation in power output, it leads to significant voltage fluctuations, reverse current overloading and difficult loop-network operation in an open-loop operation of the distribution power grid voltage. Additionally, the distribution power grid is facing with problems such as a difficulty in expanding capacity and a low utilization rate of distribution power equipment and lines, which hinder the promotion of "carbon peak, carbon neutrality" goal.

In order to deal with the above problems, there is an urgent need to establish an reconstruction capability of the power grid, to connect disconnection points between power grid lines and other lines, which is to realize an closed-loop operation of the distribution power grid, improve an capacity of the distribution power grid for bearing the new energy, and maximize the acceptance of the new energy. A core technology for achieving the closed-loop operation in the distribution power grid is a flexible loop-closing technology, which physically connects lines on both sides of a loop-closing point through specific devices and controls power flowing through the loop-closing point using control methods. A remaining capacity of each line is used to optimize a mutual transmission capacity of the lines, thereby improving a load-bearing capacity of the power grid lines, efficiently absorbing the new energy and improving the utilization rate of power grid resources. However, the existing technologies realize the above goals by adding additional flexible loop-closing equipment, and the equipment mostly adopts "back-to-back" power electronic technical solutions, such as a power electronic transformer, an energy router, a Soft Open Point (SOP), a flexible multi-state switch, etc. The flexible loop-closing equipment formed by these technical solutions not only has a series of problems such as a high cost, a large loss, a low reliability, a difficult maintenance, etc., but also requires an additional land to install the equipment. Given the widespread and diverse demand for loop-closing in the distribution power grid, the existing technologies suffer from a low practicality, a complex operation, and a challenge in promotion.

### SUMMARY

In view of this, the present disclosure provides an interconnecting power supply transformer and a method for controlling the interconnecting power supply transformer, so as to solve the problems such as a high cost, a large loss, a low reliability, a difficult maintenance, a low practicality such as a large additional land requirement, a complex operation, and a challenge in promotion.

Technical solutions provided by the present disclosure are as follows.

An embodiment of the present disclosure provides an interconnecting power supply transformer. The interconnecting power supply transformer is configured to: transmit electric energy from a first line and a second line of a power grid line to a power supply port, and interconnect the first line and the second line for mutual transmission of the electric energy between the first line and the second line at a specified power. The interconnecting power supply transformer includes a multi-phase parallel transformer, a multi-phase series transformer and multiple safety protection auxiliary adjustment devices. A head end of a primary side of each phase of the multi-phase parallel transformer is connected to the first line, and a tail end of the primary side of each phase of the multi-phase parallel transformer is connected together to form a first neutral point. A secondary side of each phase of the multi-phase parallel transformer has at least one power supply winding and multiple asymmetric windings. The power supply winding is connected to the power supply port, and each of the multiple asymmetric windings, through its respective switch bridge arm module, is interconnected with switch bridge arm modules corresponding to asymmetric windings of secondary sides of neighboring phases of the multi-phase parallel transformer to obtain a first electrical quantity, and the first electrical quantity is coupled to a primary side of the multi-phase series transformer through a secondary side of a corresponding phase of the multi-phase series transformer, so as to be connected to the second line. Each of the multiple safety protection auxiliary adjustment devices is connected in series between the first line and the second line, and is configured to: perform power quality barrier and fault isolation on the first line and the second line, dynamically adjust a interconnecting power between the first line and the second line, and perform line fault protection on the multi-phase series transformer.

The embodiment of the present disclosure provides the interconnecting power supply transformer, which includes the multi-phase parallel transformer, the multi-phase series transformer and the multiple safety protection auxiliary adjustment devices. The switch bridge arm modules set in the parallel transformer perform vector transformation and synthesis on an input voltage to obtain the first electrical quantity, and then combines the safety protection auxiliary adjustment devices to actively protect, isolate and adjust a fault, a power quality, a power, and an impedance in the interconnecting loop. Moreover, when the power supply transformer interconnects lines, it will not increase the risk of excessive short-circuit current in the power grid due to the line interconnection. It is also compatible with a relay protection system of traditional lines. The line interconnection is realized using power supply transformer, which enhances a reuse function of devices, saves the need for a separate interconnection device for the line interconnection, greatly improves economy and practicality, and is easy to promote and use.

In some embodiments, at least one of the head end of the primary side or the tail end of the primary side of the multi-phase parallel transformer has multiple taps, the multiple taps are configured to stabilize a voltage of the power supply winding of the multi-phase parallel transformer.

In the embodiment of the present disclosure, at least one of the head end of the primary side or the tail end of the primary side of the multi-phase parallel transformer is provided with multiple taps, which allows for the stable adjustment for the voltage of the secondary power supply winding of the parallel transformer by selecting different taps in a continuous power supply mode.

In some embodiments, the asymmetric winding includes multiple taps, and the multi-phase parallel transformer includes multiple voltage adjustment devices, the multiple voltage adjustment devices includes multiple switch bridge arm modules, and the number of the multiple switch bridge arm modules is same as the number of asymmetric windings of the multi-phase parallel transformer. Each of the multiple taps is connected to an input of the switch bridge arm module. The voltage adjustment device is configured to control a bridge arm switch state of the switch bridge arm module, such that the multiple taps are conducted selectively in a preset mode, and such that the multiple asymmetric windings are respectively interconnected with asymmetric windings of the neighboring phases of the multi-phase parallel transformer in a continuous, intermittent, normally open or normally closed electrical operation mode to obtain the first electrical quantity. The preset mode includes normally open, normally closed, and intermittent conduction of windings at a preset frequency.

In the embodiment of the present disclosure, the parallel transformer is provided with the multiple voltage adjustment devices, the number of the multiple switch bridge arm modules in the multiple voltage adjustment devices is same as the number of asymmetric windings of the parallel transformer, so that more great voltage vector adjustment outputs are realized using the fewer number of windings, taps and switch devices, thereby greatly improving range and granularity for adjusting voltage vectors.

In some embodiments, each primary side of the multi-phase series transformer is connected in series between the first line and the second line. An input of a secondary side of the multi-phase series transformer is connected with asymmetric windings of two neighboring phases of the multi-phase parallel transformer, and an asymmetric winding of a present phase of the multi-phase parallel transformers through the switch bridge arm modules, sequentially; and an output of a switch bridge arm module corresponding to the asymmetric winding of the present phase of the multi-phase parallel transformer is connected to a second neutral point.

In some embodiments, the secondary side of the series multi-phase transformer further includes a redundant reactor, the redundant reactor is connected to both ends of a winding of the secondary side of the multi-phase series transformer through a first switch, and the redundant reactor is configured to limit a current, magnitude of which exceeds a fifth threshold value for a duration greater than a first threshold value during a normal operation of the multi-phase series transformer.

In some embodiments, a third switch is connected in parallel at both ends of the primary side of each phase of the multi-phase series transformer, and the safety protection auxiliary adjustment device includes a first controllable switch, a second controllable switch, a third controllable switch, a fourth controllable switch, a first capacitor, a second capacitor, a first inductor, a first resistor, a second switch and an overvoltage absorber. When the power supply transformer is operating normally, the third switch is turned off, the second controllable switch and the fourth controllable switch are turned on, the first controllable switch, the third controllable switch and the second switch are turned off, and the safety protection auxiliary adjustment device presents a harmonic high-impedance characteristic, which blocks harmonics higher than a second threshold value from passing through a transformer and a line, the harmonics higher than the second threshold value generate an adverse effect on a power supply system. When a short circuit fault occurs on the first line and the second line to which the power supply transformer is connected, the first controllable switch, the third controllable switch and the fourth controllable switch are turned on, the second controllable switch and the second switch are turned off, the safety protection auxiliary adjustment device presents a high-impedance state in a preset bandwidth, which shunts a line voltage exceeding a third threshold value onto the safety protection auxiliary adjustment device, or limits a fault current within a fourth threshold value; and the safety protection auxiliary adjustment device is configured to protect the multi-phase series transformer from the voltage exceeding the third threshold value and the current exceeding the fourth threshold value due to a line short circuit. When the multi-phase parallel transformer and the multi-phase series transformer are not operating, the third switch is turned on, the third controllable switch is turned on, the second controllable switch, the fourth controllable switch and the second switch are turned off, the first controllable switch operates at a specific conduction angle or on-off frequency, and the safety protection auxiliary adjustment device directly interconnects two lines, and presents an adjustable reactance state of an inductive reactance, a capacitive reactance, an impedance or a combination of the inductive reactance, the capacitive reactance and the impedance; and the safety protection auxiliary adjustment device is configured to adjust the interconnecting power. When the safety protection auxiliary adjustment device stops operating or only needs the multi-phase series transformer and the multi-phase parallel transformer to operate, the third switch is turned off, the second switch is turned on, and the first controllable switch, the second controllable switch, the third controllable switch and the fourth controllable switch are turned off.

In the embodiment of the present disclosure, the safety protection auxiliary adjustment device is provided with the first controllable switch, the second controllable switch, the third controllable switch, the fourth controllable switch, the first capacitor, the second capacitor, the first inductor, the first resistor, the second switch and the overvoltage absorber. The power quality barrier can be realized by adjusting the on-off states of the switches in the safety protection auxiliary adjustment device. The safety protection auxiliary adjustment device can directly connect two lines independently of the series and parallel transformers and realize the adjustment of the power of the interconnecting point, which saves unnecessary working steps of the loop-closing equipment in certain conditions, can instantly realize high resistance isolation for the short-circuit fault, and can also withstand overvoltage for a long time to reduce the overvoltage burnout of the series transformer. The safety protection auxiliary adjustment device plays a crucial role in protection and active adjustment for the power supply transformer. As a result, the safety protection auxiliary adjustment device taken as a multifunctional device is integrated into the interconnecting power supply transformer, thereby enhancing an operation efficiency of the entire power supply transformer and reducing a system loss.

In some embodiments, the interconnecting power supply transformer includes a fine compensation device, a first bypass switch and a second bypass switch. An input of the fine compensation device is connected to an output of the secondary side of the multi-phase series transformer through the first bypass switch and the second bypass switch; the fine compensation device includes a four-quadrant converter with an Alternating Current (AC) to Direct Current (DC) conversion function or an AC to AC conversion function; and the fine compensation device is configured to output a continuously varying second electrical quantity. The second electrical quantity, after being superimposed with the first electrical quantity, is coupled to the primary side of the multi-phase series transformer through the secondary side of the corresponding phase of the multi-phase series transformer when the first second bypass switch and second bypass switch are in an off-state.

In the embodiment of the present disclosure, the continuously varying second electrical quantity can be obtained using a DC source and the fine compensation device composed of the four-quadrant converter with the AC to DC conversion function. It is possible to synthesize the obtained first electrical quantity and second electrical quantity, which are then coupled and superimposed onto the line through the series transformer.

In some embodiments, the interconnecting power supply transformer further includes a grounding device. The grounding device configured to ground the first neutral point. The grounding device includes a grounding reactor and a grounding resistor in series, and a reactance value of the grounding reactor and a resistance value of the grounding resistor are adjustable.

In the embodiment of the present disclosure, the power supply transformer is provided with the adjustable grounding device, which can ensure a reliable operation for the transformer and eliminate additional grounding devices that are required to be added in a substation due to the need for cable line grounding fault detection.

An embodiment of the present disclosure provides a method for controlling an interconnecting power supply transformer. The interconnecting power supply transformer is configured as the power supply transformer in the above embodiments of the present disclosure. The method includes the following operations. The multi-phase parallel transformer adjusts an on-off state of multiple switch bridge arm modules in a continuous, intermittent, or normally open or normally closed electrical operation mode based on a three-phase input voltage, and outputs the first electrical quantity. The fine compensation device is adjusted to enable the fine compensation device to output the continuously varying second electrical quantity. A voltage vector generated by superimposing the first electrical quantity and the second electrical quantity is applied onto a winding of the secondary side of the multi-phase series transformer. A winding of the primary side of the multi-phase series transformer superimposes the voltage vector coupled from the winding of the secondary side onto the three-phase input voltage to form a voltage difference between the first line and the second line, such that the mutual transmission of the electric energy between the interconnecting lines at the specified power is implemented by adjusting the voltage difference.

In the embodiment of the present disclosure, the three-phase input voltage is performed vector transformation and synthesis to obtain the first electrical quantity by adjusting the switch bridge arm modules of multiple voltage adjustment devices in the multi-phase parallel transformer, the fine compensation device outputs the continuously varying second electrical quantity, and the obtained first electrical quantity is synthesized with the second electrical quantity and then coupled and superimposed onto the input voltage through the series transformer, which realizes continuous, stepless and precise adjustment for the output electrical quantities of the device, as well as the construction of special adjustment functions for an voltage, an impedance, harmonics, etc.

In some embodiments, adjusting the fine compensation device to enable the fine compensation device to output the continuously variable second electrical quantity includes the following operations. An instruction variable for adjusting the fine compensation device is determined based on a desired voltage vector and the first electrical quantity output by the multi-phase parallel transformer. Vector frequency-division control calculation is performed for the instruction variable and an output voltage of the fine compensation device, and then a DC voltage control quantity of the fine compensation device is combined to obtain a control signal. The fine compensation device is adjusted based on a modulated and converted control signal to enable the fine compensation device to output the continuously varying second electrical quantity.

In the embodiment of the present disclosure, the control signal is determined based on a vector frequency-division control method using the desired voltage vector, the first electrical quantity output by the three-phase parallel transformer, the output voltage of the fine compensation device, and the DC voltage output by the fine compensation device; the continuously varying second electrical quantity output by the fine compensation device is adjusted based on the control signal. This control method can quickly respond to instructions and perform frequency domain analysis and control on the instructions at each frequency, respectively, so as to realize precise point-to-point tracking for the instructions. It not only realizes high-precision output of the desired variable, but also facilitates resonance analysis and early warning, and dynamically changes a control gain at each frequency point, which avoids performing high-gain control at the resonance risk points of the system.

In some embodiments, performing the vector frequency-division control calculation on the instruction variable and the output voltage of the fine compensation device, and then combining the DC voltage control quantity of the fine compensation device to obtain the control signal, includes the following operations. Fourier transform is performed for the instruction variable to obtain an instruction quantity at each frequency. The Fourier transform is performed for the output voltage of the fine compensation device to obtain an actual output quantity at each frequency. The actual output quantity is subtracted from the instruction quantity, and a first signal is obtained through error control and Inverse Fourier Transform. The error control and AC conversion are performed for a DC voltage and a DC instruction voltage of the fine compensation device to obtain a second signal. The first signal, the second signal and a feedforward quantity obtained by performing feedforward calculation for the instruction variable are added to obtain the control signal.

In the embodiment of the present disclosure, after performing the Fourier transform on the instruction variable and the output voltage of the fine compensation device, followed by the error control, and then applying the Inverse Fourier transform, the control signal is obtained by adding this result to the feedforward quantity derived from the feedforward calculation for the instruction variable. A speed of frequency domain analytical control of the instruction is improved at each frequency, a tracking speed of the instruction is improved, and a precision and accuracy of the control signal are improved.

In some embodiments, the desired voltage vector includes a voltage smoothing adjustment variable, a fundamental impedance variable, a harmonic voltage adjustment variable and a harmonic impedance adjustment variable.

In the embodiment of the present disclosure, the voltage smoothing adjustment variable, the fundamental impedance variable, the harmonic voltage adjustment variable and the harmonic impedance adjustment variable are selected by the desired voltage vector, the fine compensation device can implement continuous smooth adjustment, fundamental frequency impedance adjustment, harmonic voltage adjustment and harmonic impedance adjustment.

### BRIEF DESCRIPTION OF THE DRAWINGS

In order to explain specific implementations of the present disclosure or technical solutions in the related art more clearly, the drawings required to be used in descriptions of the specific implementations or the related art will be briefly described below. It is apparent that the drawings in the following descriptions are some implementations of the present disclosure. Other drawings may also be obtained by those of ordinary skill in the art according to these drawings without paying any creative work.
FIG. 1 is a line structural diagram of a flexible loop-closing technology in the related art.
FIG. 2 is a line structural diagram of a flexible loop-closing technology according to an embodiment of the present disclosure.
FIG. 3 is a topological structural diagram of an interconnecting power supply transformer according to an embodiment of the present disclosure.
FIG. 4 is a topological structural diagram of a multi-phase parallel transformer according to an embodiment of the present disclosure.
FIG. 5 is a topological structural diagram of a voltage adjustment device according to an embodiment of the present disclosure.
FIG. 6 is a topological structural diagram of a safety protection auxiliary adjustment device according to an embodiment of the present disclosure.
FIG. 7 is a flowchart illustrating a method for controlling a power supply transformer according to an embodiment of the present disclosure.
FIG. 8 is a flowchart illustrating a method for controlling a power supply transformer according to an embodiment of the present disclosure.
FIG. 9 is a flowchart illustrating a method for controlling a power supply transformer according to an embodiment of the present disclosure.
FIG. 10 is a flowchart illustrating a method for controlling a power supply transformer according to an embodiment of the present disclosure.

### DETAILED DESCRIPTION

Technical solutions in the present disclosure will be clearly and completely described below in combination with the drawings. It is apparent that the described embodiments are not all embodiments but part of embodiments of the disclosure. All other embodiments obtained by those of ordinary skill in the art based on the embodiments in the present disclosure without creative work shall fall within the scope of protection of the present disclosure.

In descriptions of the present disclosure, it should be noted that terms "center", "upper", "lower", "left", "right", "vertical", "horizontal", "inside", "outside", or the like indicate an orientation or positional relationship based on an orientation or positional relationship illustrated in the drawings, and are only intended to describe the present disclosure easily and simplify the descriptions, and are not intended to indicate or imply that the apparatus or element referred by these terms must have a particular orientation, be constructed and operate in a particular orientation, thus these terms may not be understood as limitation of the present disclosure. Furthermore, terms "first", "second" and "third" are only intended for description purposes and may not be understood to indicate or imply relative importance.

In the descriptions of the present disclosure, it should be noted that unless otherwise specified and limited clearly, terms "mount", "interconnect" and "connect" are understood in a broad sense, for example, they may indicate fixed connection, detachable connection, or integral connection; they may indicate mechanical connection or electrical connection; they may indicate direct connection, or indirect connection through an intermediate medium; or they may indicate interconnection between two components, wireless connection or wired connection. Specific meaning of the above terms in the present disclosure may be understood by those of ordinary skill in the art in specific cases.

Furthermore, technical features involved in various embodiments of the present disclosure as described below may be combined with each other as long as there is no conflict with each other.

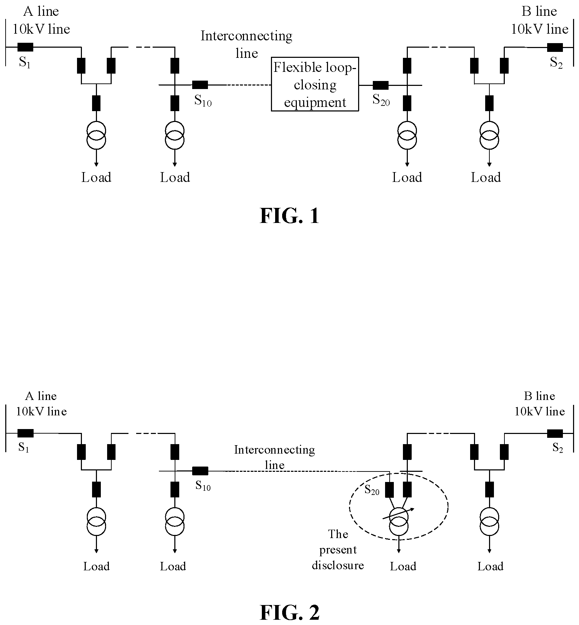

As described in the background, in the related art, flexible loop-closing lines generally require additional flexible loop-closing equipment, and the specific line structure thereof is illustrated in FIG. 1, which realizes a loop-closing operation of the A line and the B line by setting the flexible loop-closing equipment between the two lines. However, the use of flexible loop-closing equipment not only has a series of problems such as a high cost, a large loss, a low reliability, a difficult maintenance, etc., but also requires an additional land to install the equipment.

Therefore, in view of the problems existing in the existing loop-closing equipment, the present disclosure discloses an interconnecting power supply transformer with a flexible loop-closing function, which can not only realize a traditional power supply function, but also flexibly close the lines on both sides of a loop-closing point nearby. The connection relationship of the power supply transformer in the line is illustrated in FIG. 2. The interconnecting power supply transformer with the flexible loop-closing function can be directly obtained by transforming and upgrading the existing substation transformer. Therefore, the power supply transformer provided by the embodiment of the present disclosure does not require to occupy the additional land, can realize flexible loop-closing only by the power supply transformer itself, and can realize flexible adjustment of the power flowing through the loop-closing point, and also has the advantages of actively safety protection against an power grid fault, blocking power quality, and withstanding large impulse current load transfer, etc. Therefore, it is easier to promote in engineering and can solve many existing distribution power gird problems. It has advantages of a good economy, a high practicability, a strong innovation, and a high reliability, the low loss and an easy maintenance.

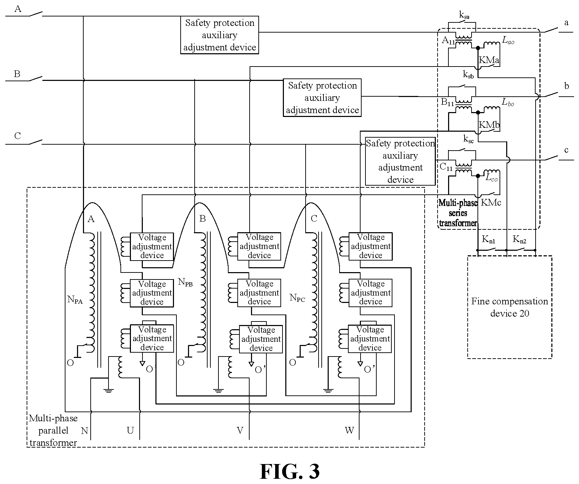

An embodiment of the present disclosure provides an interconnecting power supply transformer, as illustrated in FIG. 3, the interconnecting power supply transformer is configured to transmit electric energy from a first line and a second line of a power grid line to a power supply port, and interconnect the first line and the second line for mutual transmission of the electric energy between the first line and the second line at a specified power. The interconnecting power supply transformer includes a multi-phase parallel transformer, a multi-phase series transformer and multiple safety protection auxiliary adjustment devices. A head end of a primary side of each phase of the multi-phase parallel transformer is connected to the first line, and a tail end of the primary side of each phase of the multi-phase parallel transformer is connected together to form a first neutral point. A secondary side of each phase of the multi-phase parallel transformer has at least one power supply winding and multiple asymmetric windings. The power supply winding is connected to the power supply port, and each of the multiple asymmetric windings, through its respective switch bridge arm module, is interconnected with switch bridge arm modules corresponding to asymmetric windings of secondary sides of neighboring phases of the multi-phase parallel transformer to obtain a first electrical quantity, and the first electrical quantity is coupled to a primary side of the multi-phase series transformer through a secondary side of a corresponding phase of the multi-phase series transformer, so as to be connected to the second line. Each of the multiple safety protection auxiliary adjustment devices is connected in series between the first line and the second line, and is configured to: perform power quality barrier and fault isolation on the first line and the second line, dynamically adjust a interconnecting power between the first line and the second line, and perform line fault protection on the multi-phase series transformer.

Each primary side of the multi-phase series transformer is connected in series between the first line and the second line. An input of a secondary side of the multi-phase series transformer is connected with asymmetric windings of two neighboring phases of the multi-phase parallel transformer, and an asymmetric winding of a present phase of the multi-phase parallel transformers through the switch bridge arm modules, sequentially. An output of a switch bridge arm module corresponding to the asymmetric winding of the present phase of the multi-phase parallel transformer is connected to a second neutral point.

Illustratively, the interconnecting power supply transformer in the embodiment of the present disclosure may realize the transmission of the electric energy from the first line to the second line, the transmission of the electric energy from the second line to the first line, and the transmission of the electric energy from the first line and/or the second line to the power supply port. The setting of the asymmetric windings can realize more adjustment steps and better adjustment accuracy with fewer taps.

In the embodiment of the present disclosure, as illustrated in FIG. 3, the tail end of the primary side of each phase of the parallel transformer are connected to form the first neutral point O, and the power supply ports U, V and W of the power supply windings can supply power to the load, which can realize single-phase power supply or three-phase power supply. With the addition of port N, a three-phase four-wire power supply can be realized. The dynamic adjustment of the interconnecting power refers to determining: transferring power from the first line to the second line to meet the required power, transferring power from the second line to the first line to meet the required power, or having both the first line and second line supply power to the supply power ports (U, V, W) simultaneously, based on transmission capacities of the first line and second line.

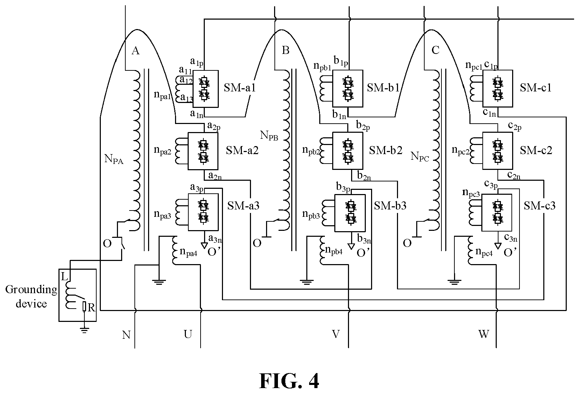

In the embodiment of the present disclosure, the structure of the multi-phase parallel transformer is illustrated in FIG. 3 and FIG. 4. FIG. 3 is a topological diagram of an interconnecting power supply transformer, which includes the multi-phase parallel transformer. FIG. 4 is the multi-phase parallel transformer included in the interconnecting power supply transformer in FIG. 3. The multi-phase parallel transformer is a transformer with A-phase, B-phase and C-phase connected in parallel, the multi-phase series parallel is a transformer with A-phase, B-phase and C-phase connected in series. As illustrated in FIG. 3 and FIG. 4, an input of a safety protection auxiliary adjustment device in an A-phase line is connected to an input of the A-phase line and an input of the primary side of A-phase of the A-phase parallel transformer. An output of the safety protection auxiliary adjustment device in the A-phase line is connected to an input of a primary side of A-phase of the three-phase series transformer. An output of the primary side of A-phase of the three-phase series transformer is connected to an output of the A-phase line. A head end A₁₁ of a secondary side winding of A-phase of the series transformer is connected to a first output b₁ₚ of a voltage adjustment device SM-b1 on a secondary side of B-phase of the parallel transformer. A second output b₁ₙ of the voltage adjustment device SM-b1 on the secondary side of B-phase is connected to a first output c₂ₚ of a voltage adjustment device SM-c2 on a secondary side of C-phase. A second output c₂ₙ of the voltage adjustment device SM-c2 on the secondary side of C-phase is connected to a first output a₃ₚ of a voltage adjustment device SM-a3 on the secondary side of A-phase.

As illustrated in FIG. 3 and FIG. 4, an input of a safety protection auxiliary adjustment device in a B-phase line is connected to an input of the B-phase line and an input of a primary side of B-phase of the B-phase parallel transformer. An output of the safety protection auxiliary adjustment device in the B-phase line is connected to an input of a primary side of B-phase of the three-phase series transformer. An output of the primary side of B-phase of the three-phase series transformer is connected to an output of the B-phase line. A head end B₁₁ of a secondary side winding of B-phase of the series transformer is connected to a first output c₁ₚ of a voltage adjustment device SM-c1 on a secondary side of C-phase of the parallel transformer. A second output c₁ₙ of the voltage adjustment device SM-c1 on the secondary side of C-phase is connected to a first output a₂ₚ of a voltage adjustment device SM-a2 on a secondary side of A-phase. A second output a₂ₙ of the voltage adjustment device SM-a2 on the secondary side of A-phase is connected to a first output b₃ₚ of a voltage adjustment device SM-b3 on the secondary side of B-phase.

As illustrated in FIG. 3 and FIG. 4, an input of a safety protection auxiliary adjustment device in a C-phase line is connected to an input of the C-phase line and an input of a primary side of C-phase of the C-phase parallel transformer. An output of the safety protection auxiliary adjustment device in the C-phase line is connected to an input of a primary side of C-phase of the three-phase series transformer. An output of the primary side of C-phase of the three-phase series transformer is connected to an output of the C-phase line. A head end C11 of a secondary side winding of C-phase of the series transformer is connected to a first output a1p of a voltage adjustment device SM-a1 on a secondary side of A-phase of the parallel transformer. A second output a1n of the voltage adjustment device SM-a1 on the secondary side of A-phase is connected to a first output b2p of a voltage adjustment device SM-b2 on a secondary side of B-phase. A second output b2n of the voltage adjustment device SM-b2 on the secondary side of B-phase is connected to a first output c3p of a voltage adjustment device SM-c3 on the secondary side of C-phase. A second output a3n of the voltage adjustment device SM-a3, a second output b3n of the voltage adjustment device SM-b3 and a second output c3n of the voltage adjustment device SM-c3 are connected together to form the second neutral point O'.

The embodiment of the present disclosure provides the interconnecting power supply transformer, which includes the multi-phase parallel transformer, the multi-phase series transformer and the multiple safety protection auxiliary adjustment devices. The switch bridge arm modules set in the parallel transformer perform vector transformation and synthesis on an input voltage to obtain the first electrical quantity, and then combines the safety protection auxiliary adjustment devices to actively protect, isolate and adjust a fault, a power quality, a power, and an impedance in the interconnecting loop. Moreover, when the power supply transformer interconnects lines, it will not increase the risk of excessive short-circuit current in the power grid due to the line interconnection. It is also compatible with a relay protection system of traditional lines. The line interconnection is realized using power supply transformer, which enhances a reuse function of devices, saves the need for a separate interconnection device for the line interconnection, greatly improves economy and practicality, and is easy to promote and use.

In an embodiment of the present disclosure, at least one of the head end of the primary side or the tail end of the primary side of the multi-phase parallel transformer has multiple taps, the multiple taps are configured to stabilize a voltage of the power supply winding of the multi-phase parallel transformer. Specifically, the head end of the primary side or the tail end of the primary side of the parallel transformer has the multiple taps, for example, the head end of the primary side of the parallel transformer has the multiple taps, or the tail end of the primary side of the parallel transformer has the multiple taps, or both the head end of the primary side of the parallel transformer and the tail end of the primary side of the parallel transformer have the multiple taps. For the head end with the multiple taps, one tap is selected to be connected to the first line. For the tail end with the multiple taps, one tap is selected to be connected to the first neutral point.

In the embodiment of the present disclosure, at least one of the head end of the primary side or the tail end of the primary side of the multi-phase parallel transformer is provided with multiple taps, which allows for on-load voltage adjustment for the secondary power supply winding of the parallel transformer by selecting different taps online.

In an embodiment of the present disclosure, the asymmetric winding includes multiple taps, and the multi-phase parallel transformer includes multiple voltage adjustment devices, the multiple voltage adjustment devices includes multiple switch bridge arm modules, and the number of the multiple switch bridge arm modules is same as the number of asymmetric windings of the multi-phase parallel transformer. Each of the multiple taps is connected to an input of the switch bridge arm module. The voltage adjustment device is configured to control a bridge arm switch state of the switch bridge arm module, such that the multiple taps are conducted selectively in a preset mode, and such that the multiple asymmetric windings are respectively interconnected with asymmetric windings of the neighboring phases of the multi-phase parallel transformer in a continuous, intermittent, normally open or normally closed electrical operation mode to obtain the first electrical quantity. The preset mode includes normally open, normally closed, and intermittent conduction of windings at a preset frequency.

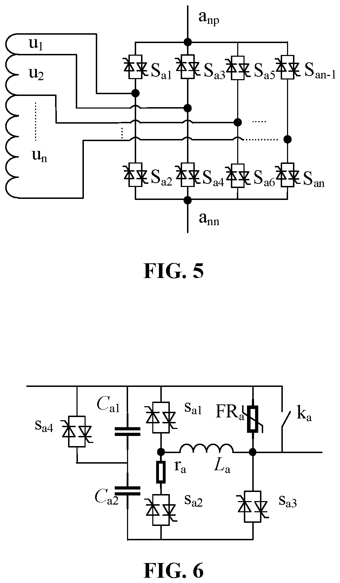

Illustratively, as illustrated in FIG. 4, taking A-phase as an example, the taps of the asymmetric winding include a₁₁, a₁₂ and a₁₃, as illustrated in FIG. 5, the switch bridge arm module is composed of multiple bridge arm switches. Taking A-phase as an example for introduction, assuming that u₁ and u₂ are output voltages of the asymmetric winding of the parallel transformer, respectively, the winding can also continue to extract multiple taps to output multiple voltages (e.g., uₙ). Each tap of the winding is connected to a bridge arm. There are many different output voltage states between an output aₙₚ and an output aₙₙ of the switch bridge arm module. For example, when n = 3, there are 13 output voltage vectors.
(1) A bridge arm switch Sₐ₁ and a bridge arm switch Sₐ₄ are turned on, other switches are open, and an output voltage is u₁.
(2) A bridge arm switch Sₐ₃ and a bridge arm switch Sₐ₆ are turned on, other switches are open, and an output voltage is u₂.
(3) A bridge arm switch Sₐ₅ and a bridge arm switch Sₐₙ are turned on, other switches are open, and an output voltage is uₙ.
(4) The bridge arm switch Sₐ₁ and the bridge arm switch Sₐ₆ are turned on, other switches are open, and an output voltage is u₁+u₂.
(5) The bridge arm switch Sₐ₃ and the bridge arm switch Sₐₙ are turned on, other switches are open, and an output voltage is u₂+uₙ.
(6) The bridge arm switch Sₐ₁ and the bridge arm switch Sₐₙ are turned on, other switches are open, and an output voltage is u₁+u₂+uₙ.
(7) A bridge arm switch Sₐ₂ and the bridge arm switch Sₐ₃ are turned on, other switches are open, and an output voltage is -u₁.
(8) The bridge arm switch Sₐ₄ and the bridge arm switch Sₐ₅ are turned on, other switches are open, and an output voltage is -u₂.
(9) The bridge arm switch Sₐ₆ and A bridge arm switch Sₐₙ₋₁ are turned on, other switches are open, and an output voltage is -uₙ.
(10) The bridge arm switch Sₐ₂ and the bridge arm switch Sₐ₅ are turned on, other switches are open, and an output voltage is -(u₁+u₂).
(11) The bridge arm switch Sₐ₄ and the bridge arm switch Sₐₙ₋₁ are turned on, other switches are open, and an output voltage is -(u₂+uₙ).
(12) The bridge arm switch Sₐ₂ and the bridge arm switch Sₐₙ₋₁ are turned on, other switches are open, and an output voltage is -(u₁+u₂+uₙ).
(13) The bridge arm switch Sₐ₁ and the bridge arm switch Sₐ₂ are turned on, other switches are open; or the bridge arm switch Sₐ₃ and the bridge arm switch Sₐ₄ are turned on, other switches are open; or the bridge arm switch Sₐ₅ and the bridge arm switch Sₐ₆ are turned on, other switches are open; or the bridge arm switch Sₐₙ₋₁ and the bridge arm switch Sₐₙ are turned on, other switches are open, and the output voltage in all these cases is 0.

The voltages output by switch bridge arm modules of neighboring phases and the voltage output by the switch bridge arm module of the present phase have some differences in amplitude and phase. Therefore, when the voltages output by the switch bridge arm modules of different phases are superimposed, multiple adjustment effects on the amplitude and phase of the input voltage can be realized. For example, when n=3, one winding is used in each phase, and each winding has three voltage levels. 13×13×13=2197 vector outputs can be realized by combining one switch bridge arm module of the present phase and two switch bridge arm module of the neighboring phases in series.

In the embodiment of the present disclosure, the parallel transformer is provided with the multiple voltage adjustment devices, the number of the multiple switch bridge arm modules in the multiple voltage adjustment devices is same as the number of asymmetric windings of the parallel transformer, so that more great voltage vector adjustment outputs are realized using the fewer number of windings, taps and switch devices, thereby greatly improving range and granularity for adjusting voltage vectors.

In an embodiment of the present disclosure, as illustrated in FIG. 3, the secondary side of the series multi-phase transformer further includes a redundant reactor, the redundant reactor is connected to both ends of a winding of the secondary side of the multi-phase series transformer through a first switch, and the redundant reactor is configured to limit a current, magnitude of which exceeds a fifth threshold value for a duration greater than a first threshold value during a normal operation of the multi-phase series transformer. In a specific embodiment, the primary side of each phase of the multi-phase series transformer includes a third switch and a primary winding, and two ends of the third switch are respectively connected in parallel with two ends of the primary winding of the series transformer. The secondary side of each phase of the multi-phase series transformer includes a first inductor, a first switch and a secondary winding, and the first inductor and the first switch are connected in series and then connected in parallel with the secondary winding. In the embodiment of the present disclosure, taking A-phase as an example, when a current limiting operation is required, the first switch KMa is turned on, which is equivalent to the second inductor Lao being connected in parallel to the secondary winding of the A-phase series transformer. The second inductor Lao, after being converted by the A-phase series transformer at a certain ratio, is added to the line of the primary side. At this time, the A-phase parallel transformer can cease to output voltage. The A-phase series transformer presents a function of a current limiting reactor. The current limiting reactor is configured to limit a large current over a long period. When the series transformer is not required to operate, the third switch kₛₐ is turned on.

The design of the multi-phase series transformer in the embodiment can realize voltage adjustment while adjusting the impedance, which plays a beneficial role in power quality harmonic barrier and adjusts the impedance on demand.

In the embodiment of the present disclosure, as illustrated in FIG. 3 and FIG. 6, a third switch is connected in parallel at both ends of the primary side of each phase of the multi-phase series transformer, and the safety protection auxiliary adjustment device includes a first controllable switch sₐ₁, a second controllable switch sₐ₂, a third controllable switch sₐ₃, a fourth controllable switch sₐ₄, a first capacitor *Cₐ₁,* a second capacitor *Cₐ₂,* a first inductor *Lₐ,* a first resistor rₐ, a second switch kₐ, and an overvoltage absorber FRₐ.

One end of the fourth controllable switch sₐ₄ is connected with an input of the safety protection auxiliary adjustment device, one end of the first capacitor *Cₐ₁,* one end of the first controllable switch sₐ₁, one end of the overvoltage absorber FRₐ and one end of the second switch kₐ, respectively. The other end of the fourth controllable switch sₐ₄ is connected with the other end of the first capacitor *Cₐ₁* and one end of the second capacitor *Cₐ₂* respectively. The other end of the second capacitor *Cₐ₂* is connected with one end of the second controllable switch sₐ₂ and one end of the third controllable switch sₐ₁, respectively. The other end of the first controllable switch sₐ₁ is connected with one end of the first inductor *Lₐ* and one end of the first resistor rₐ, respectively. The other end of the first resistor rₐ is connected with the other end of the second controllable switch sₐ₂. The other end of the first inductor *Lₐ* is connected with an output of the safety protection auxiliary adjustment device, the other end of the overvoltage absorber FRₐ, the other end of third controllable switch sₐ₃, and the other end of second controllable switch sₐ₂.

The first controllable switch sₐ₁, the second controllable switch sₐ₂, the third controllable switch sₐ₃ and the fourth controllable switch sₐ₄ are switch devices with a bidirectional current conduction function, and an on-off state of each controllable switch can be controlled, for example, closing a certain controllable switch or opening a certain controllable switch. Different operation states of each switch correspond to different functions, and the overvoltage absorber FRₐ can absorb voltage in a specific case to protect circuit from overvoltage.

When the power supply transformer is operating normally, the third switch is turned off, the second controllable switch and the fourth controllable switch are turned on, the first controllable switch, the third controllable switch and the second switch are turned off, and the safety protection auxiliary adjustment device presents a harmonic high-impedance characteristic, which blocks harmonics higher than a second threshold value from passing through a transformer and a line, the harmonics higher than the second threshold value generate an adverse effect on a power supply system. When a short circuit fault occurs on the first line and the second line to which the power supply transformer is connected, the first controllable switch, the third controllable switch and the fourth controllable switch are turned on, the second controllable switch and the second switch are turned off, the safety protection auxiliary adjustment device presents a high-impedance state in a preset bandwidth, which shunts a line voltage exceeding a third threshold value onto the safety protection auxiliary adjustment device, or limits a fault current within a fourth threshold value; and the safety protection auxiliary adjustment device is configured to protect the multi-phase series transformer from the voltage exceeding the third threshold value and the current exceeding the fourth threshold value due to a line short circuit. When the multi-phase parallel transformer and the multi-phase series transformer are not operating, the third switch is turned on, the third controllable switch is turned on, the second controllable switch, the fourth controllable switch and the second switch are turned off, the first controllable switch operates at a specific conduction angle or on-off frequency, and the safety protection auxiliary adjustment device directly interconnects two lines, and presents an adjustable reactance state of an inductive reactance, a capacitive reactance, an impedance or a combination of the inductive reactance, the capacitive reactance and the impedance; and the safety protection auxiliary adjustment device is configured to adjust the interconnecting power. When the safety protection auxiliary adjustment device stops operating or only needs the multi-phase series transformer and the multi-phase parallel transformer to operate, the third switch is turned off, the second switch is turned on, and the first controllable switch, the second controllable switch, the third controllable switch and the fourth controllable switch are turned off.

In the embodiment of the present disclosure, when the interconnecting power supply transformer is operating normally, the third switch is turned off, the third switch includes kₛₐ, k_{sb} and k_{sc}, the second controllable switch sₐ₂ and the fourth controllable switch sₐ₄ are turned on, and the first controllable switch sₐ₁, the third controllable switch sₐ₃ and the second switch kₐ are turned off. The second capacitor *Cₐ₂,* the first resistor rₐ and the first inductor *Lₐ* operates in series. The parameters of the capacitor and the inductor are set to present a resonant state, with a resonant frequency being a rated operation frequency of the entire transformer. The second threshold value is a preset maximum value of harmonics passing through the entire intercontacting transformer. The first resistor rₐ can widen the frequency bandwidth at a resonant frequency point, which can avoid an operation in a non-resonant state due to a certain deviation in the operating frequency. The safety protection auxiliary adjustment device presents a low-impedance state at the rated operation frequency, which is equivalent to an original operation remaining unchanged, without affecting the flexible closed-loop adjustment requirement of the transformer. However, the safety protection auxiliary adjustment device presents the harmonic high-impedance characteristic in other frequency bands other than the rated operation frequency, which can effectively block the harmonics higher than the second threshold from passing through the transformer and the line , thereby adversely affecting the power supply system. This greatly improves the operation reliability of the transformer and its own power quality.

In the embodiment of the present disclosure, when the short circuit fault occurs on the first line and the second line to which the power supply transformer is connected (e.g., a grounding fault, which is equivalent to the entire opreration voltage of the lines being applied to the series transformer if not specially processed, causing great harm to the transformer system), it is necessary to close the first controllable switch sₐ₁, the third controllable switch sₐ₃, and the fourth controllable switch sₐ₄, while opening the second controllable switch sₐ₂ and the second switch kₐ. At this time, the second capacitor Cₐ₂ and the first inductor *Lₐ* operates in parallel, and the parameters of the capacitor and inductor are set to present the resonant state, with the resonant frequency also being the rated operation frequency of the entire transformer. At the rated frequency, the high-impedance state in the preset bandwidth is presented. Therefore, the safety protection auxiliary adjustment device can shunt the line voltage exceeding the third threshold on itself or limit the fault current within the fourth threshold. The safety protection auxiliary adjustment device is configured to protect the series transformer from the voltage exceeding the third threshold and the current exceeding the fourth threshold due to the line short circuit. The third threshold is a preset maximum voltage value that the series transformer can withstand, and the fourth threshold is the preset maximum current value that the series transformer can withstand. If the voltage exceeds the third threshold, indicating an excessive voltage, the overvoltage absorber can absorb the excessive voltage, which ensures that the voltage across the series transformer does not become too high, plays a protective role for the transformer and also actively suppresses the fault current.

In the embodiment of the present disclosure, taking A-phase as an example, two ends of the primary winding of the series transformer are respectively connected with two ends of the third switch kₛₐ. When the multi-phase parallel transformer and the multi-phase series transformer are not operating, the first controllable switch sₐ₁ (e.g., a thyristor) operates at the specific conduction angle, and is in series with the first inductor *Lₐ.* the third controllable switch sₐ₃ is turned on, the third switch kₛₐ is turned on, the second controllable switch sₐ₂, the fourth controllable switch sₐ₄ and the second switch kₐ are open, and the first capacitor Cₐ₁ and the second capacitor Cₐ₂ are connected in series to form a new equivalent capacitance parameter. At this time, the branch formed by the first capacitor Cₐ₁ and the second capacitor Cₐ₂ connected in series are in parallel with a branch formed by the the first inductor *Lₐ* and the first controllable switch sa1. The new equivalent capacitance parameter formed by the series connection of the two capacitors is configured to create a new impedance point to support the adjustment in this mode. The safety protection auxiliary adjustment device can present a continuously adjustable capacitive reactance or inductive reactance by setting different conduction angles for the first controllable switch sₐ₁. Therefore, the safety protection auxiliary adjustment device can operate independently of the transformer. This device can directly interconnects two lines and present an adjustable reactance state of the inductive reactance, the capacitive reactance, the resistance, or a combination of the three. The safety protection auxiliary adjustment device is configured to within a certain range to adjust power at the interconnecting point. This achieves a specific case in which only the safety protection auxiliary adjustment device is needed to adjust the interconnecting line, which avoides an unnecessary operation mode of the series transformer and parallel transformer, thereby improving a device utilization, reducing a system loss, and facilitating an engineering application.

When the safety protection auxiliary adjustment device stops operating or only needs the series transformer and the parallel transformer to operate, the third switch kₛₐ is turned off, the second switch kₐ is turned on, and the first controllable switch sₐ₁, the second controllable switch sₐ₂, the third controllable switch sₐ₃ and the fourth controllable switch sₐ₄ are turned off, so that the safety protection auxiliary adjustment device is not operating, which is convenient for the maintenance of the device.

In the embodiment of the present disclosure, the safety protection auxiliary adjustment device is provided with the first controllable switch, the second controllable switch, the third controllable switch, the fourth controllable switch, the first capacitor, the second capacitor, the first inductor, the first resistor, the second switch and the overvoltage absorber. The power quality barrier can be realized by adjusting the on-off states of the switches in the safety protection auxiliary adjustment device. The safety protection auxiliary adjustment device can directly connect two lines independently of the series and parallel transformers and realize the adjustment of the power of the interconnecting point, which saves unnecessary working steps of the loop-closing equipment in certain conditions, can instantly realize high resistance isolation for the short-circuit fault, and can also withstand overvoltage for a long time to reduce the overvoltage burnout of the series transformer. The safety protection auxiliary adjustment device plays a crucial role in protection and active adjustment for the power supply transformer. As a result, the safety protection auxiliary adjustment device taken as a multifunctional device is integrated into the interconnecting power supply transformer, thereby enhancing an operation efficiency of the entire power supply transformer and reducing the system loss.

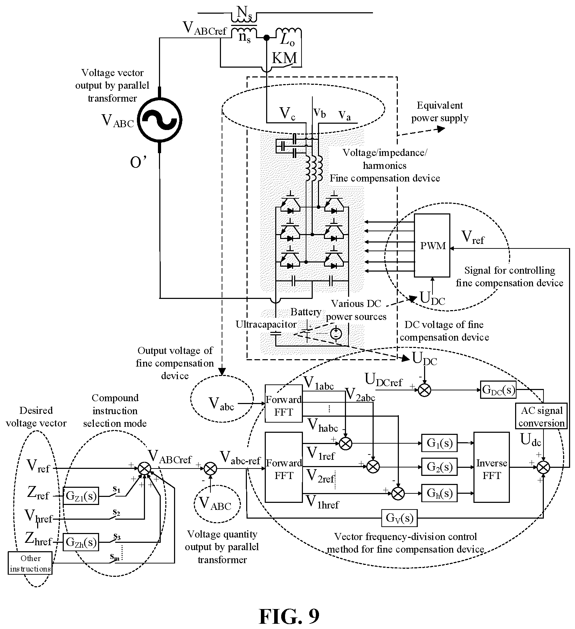

In the embodiment of the present disclosure, the intercontacting power supply transformer further includes a fine compensation device, a first bypass switch and a second bypass switch. An input of the fine compensation device is connected to an output of the secondary side of the multi-phase series transformer through the first bypass switch kₙ₁ and the second bypass switch kₙ₂. The fine compensation device includes a four-quadrant converter with an AC to DC (AC-DC) conversion function or AC to AC (AC-AC) conversion function, and the fine compensation device is configured to output a continuously varying second electrical quantity. If the first bypass switch kₙ₁ and the second bypass switch kₙ₂ on the output side of the secondary side of the series transformer are in an off-state, the second electrical quantity output is superimposed with the first electrical quantity and then coupled to the corresponding primary side of the series transformer through the secondary side. In a specific embodiment, as illustrated in FIG. 9, the fine compensation device is composed of a typical converter structure.

Illustratively, the fine compensation device can be an AC/AC converter or a DC/AC converter, with an AC adjustable AC output function can be used. Its wiring mode can be a three-phase four-wire system or a three-phase three-wire system. If it is the three-phase four-wire system, its fourth wire output can be connected to the second neutral point O'. A DC source is a device that provides DC, such as an ultracapacitor, a battery, or various DC power sources. The continuously varying second electrical quantity can be obtained by controlling six transistors. The first bypass switch kₙ₁ and the second bypass switch kₙ₂ are set among three-phase inputs of the fine compensation device. The two bypass switches can be controlled to open or close based on an operational requirement. For example, when the fine compensation device needs to operate, the two bypass switches kₙ₁ and kₙ₂ are turned off, and the continuously varying second electrical quantity can be obtained by controlling switch tubes in the fine compensation device using a Pulse Width Modulation (PWM) signal. The second electrical quantity output is superimposed with the first electrical quantity and then coupled to the corresponding primary side of the series transformer through the secondary side. When the fine compensation device is not needed to operate, the two bypass switches kₙ₁ and kₙ₂ are turned on, and the fine compensation device is stopped at the same time.

The embodiment of the present disclosure, the continuously varying second electrical quantity can be obtained using a the DC source and the fine compensation device composed of the four-quadrant converter with the AC to DC conversion function. It is possible to synthesize the obtained first electrical quantity and second electrical quantity, which are then coupled and superimposed onto the line through the series transformer. The fine compensation device can implement continuous smooth adjustment, fundamental frequency impedance adjustment, harmonic voltage adjustment and harmonic impedance adjustment by controlling the input of the fine compensation device and a state of each switch tube.

In an embodiment of the present disclosure, as illustrated in FIG. 4, the intercontacting power supply transformer further includes a grounding device. The grounding device configured to ground the first neutral point. The grounding device includes a grounding reactor and a grounding resistor in series, and a reactance value of the grounding reactor and a resistance value of the grounding resistor are adjustable.

Illustratively, multiple taps are drawn from the tail end of the primary winding of the parallel transformer to form a voltage adjustment loop, and the turns ratio between the primary side and secondary side can be changed by selecting different taps. The head end of the primary winding is the voltage input for each phase. The grounding device can connect the first neutral point O to the ground. The selected taps at the tail end of the primary winding of each phase of the parallel transformer are connected to the first neutral point. The grounding device includes a reactor *L* and a resistor R connected in series. The reactance value of the reactor *L* can be adjusted by changing the taps, and the resistance value of the resistor R can be adjusted. The reactance value and resistance value of the grounding device can be adjusted online based on a requirement for setting parameters of the grounding protection system of the power grid line.

In the embodiment of the present disclosure, the power supply transformer is provided with the adjustable grounding device, which can ensure a reliable operation for the transformer and eliminate additional grounding devices that are required to be added in a substation due to the need for cable line grounding fault detection.

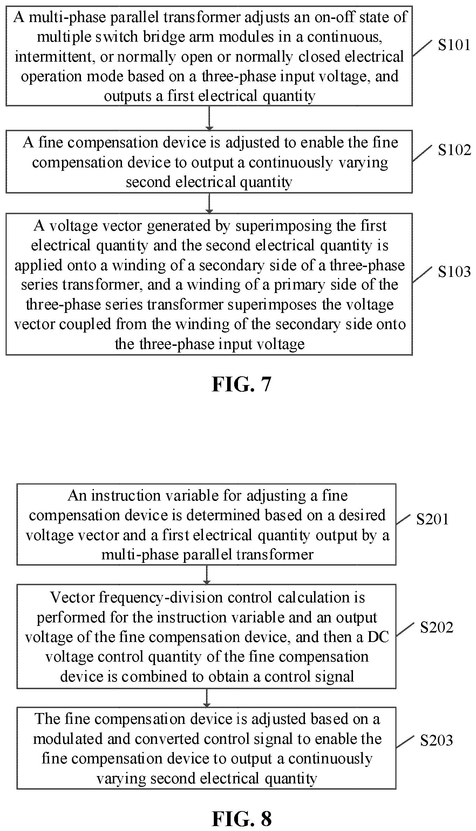

An embodiment of the present disclosure provides a method for controlling an interconnecting power supply transformer. As illustrated in FIG. 7, the interconnecting power supply transformer is configured as the power supply transformer in the above embodiments of the present disclosure. The method includes the following operations.

At operation S101, the multi-phase parallel transformer adjusts an on-off state of multiple switch bridge arm modules in a continuous, intermittent, or normally open or normally closed electrical operation mode based on a three-phase input voltage, and outputs the first electrical quantity. Specifically, according to the three-phase input voltage in the line, the on-off states of the multiple switch bridge arms are adjusted in a continuous, intermittent or normally open/normally closed electrical working mode, and the three-phase parallel transformer outputs the first electrical quantity.

At operation 102, the fine compensation device is adjusted to enable the fine compensation device to output the continuously varying second electrical quantity. Specifically, the second electrical quantity that varies continuously within a certain range can be output by adjusting the fine compensation device.

At operation S103, a voltage vector generated by superimposing the first electrical quantity and the second electrical quantity is applied onto a winding of the secondary side of the multi-phase series transformer. A winding of the primary side of the multi-phase series transformer superimposes the voltage vector coupled from the winding of the secondary side onto the three-phase input voltage to form a voltage difference between the first line and the second line, such that the mutual transmission of the electric energy between the interconnecting lines at the specified power is implemented by adjusting the voltage difference. Specifically, the voltage vector generated by superimposing the first electrical quantity and the second electrical quantity is applied onto the winding of the secondary side of the multi-phase series transformer. The winding of the primary side of each phase of the multi-phase series transformer superimposes the voltage vector coupled from the winding of the secondary side of the respective phase onto the corresponding input voltage, the voltage vector coupled from the winding of the secondary side forms a voltage difference between the first line and the second line, the mutual transmission of the electric energy between the interconnecting lines at the specified power is implemented by adjusting the voltage vector coupled from the winding of the secondary side (i.e., the voltage difference).

In the embodiment of the present disclosure, the three-phase input voltage is performed vector transformation and synthesis to obtain the first electrical quantity by adjusting the switch bridge arm modules of multiple voltage adjustment devices in the multi-phase parallel transformer, the fine compensation device outputs the continuously varying second electrical quantity, and the obtained first electrical quantity is synthesized with the second electrical quantity and then coupled and superimposed onto the input voltage through the series transformer, which realizes continuous, stepless and precise adjustment for the output electrical quantities of the device, as well as the construction of special adjustment functions for an voltage, an impedance, harmonics, etc.

In some embodiments, as illustrated in FIG. 8, adjusting the fine compensation device to enable the fine compensation device to output the continuously variable second electrical quantity includes the following operations.

At operation S201, an instruction variable for adjusting the fine compensation device is determined based on a desired voltage vector and the first electrical quantity output by the multi-phase parallel transformer. Assuming that V_{ABC} is the output first electrical quantity after the switch bridge arm modules of the parallel transformer are interconnected, and if the desired voltage vector V_{ABCref} is required to obtain on the secondary winding of the series transformer (this voltage superimposes with the entire device input voltage to obtain the adjustment voltage required for the interconnection operation), then the voltage output by the fine compensation device needs to be V_{abc-ref} = V_{ABCref} - V_{ABC} (V_{abc-ref} is taken as the instruction variable for the fine compensation device). Therefore, the instruction variable for adjusting the fine compensation device can be determined by subtracting the first electrical quantity output by the multi-phase parallel transformer from the desired voltage vector. At this point, the desired voltage vector includes a voltage smoothing adjustment variable.

In addition, if the fine compensation device is needed to adjust impedance and harmonics, a fundamental impedance variable, a harmonic voltage adjustment variable and a harmonic impedance adjustment variable can be added to the desired voltage vector.

In an embodiment of the present disclosure, as illustrated in FIG. 9, the desired voltage vector includes a voltage smoothing adjustment variable, a fundamental impedance variable, a harmonic voltage adjustment variable and a harmonic impedance adjustment variable, such as including the voltage smoothing adjustment variable V_{1ref} (because the voltage output by the parallel transformer varies in a step form, Therefore, the instruction can be a variable, which is set to realize the continuous and smooth adjustment for the output voltage of the parallel transformer), the fundamental impedance variable Z_{1ref} (a variable, which is set mainly to realize the fundamental impedance adjustment), the harmonic voltage adjustment variable V_{href} (a variable, which is set mainly to realize the harmonic voltage adjustment), the harmonic impedance adjustment variable Z_{href} (a variable, which is set mainly to realize the harmonic impedance adjustment) and other instruction variables. Superposition of multiple instructions can be realized selecting switches s₁, s₂, s₃, ..., sₘ.

When determining the instruction variable, since some variables in the desired voltage vector do not belong to a voltage vector, it is necessary to convert the variables that do not belong to the voltage vector into the voltage vector. For example, the fundamental impedance variable Z_{1ref} and the harmonic impedance adjustment variable V_{href} are calculated by G_{z1}(s) controller and G_{zh}(s) controller to obtain the corresponding voltage vector, and the obtained voltage vectors are added together to obtain the desired voltage vector V_{ABCref}.

At operation S202, vector frequency-division control calculation is performed for the instruction variable and an output voltage of the fine compensation device, and then a DC voltage control quantity of the fine compensation device is combined to obtain a control signal. Specifically, the obtained instruction variable and the output voltage of the fine compensation device are subjected to frequency-division calculation and processing, and then the DC voltage control quantity output by the fine compensation device are combined, for example, Fourier transform and error control are employed to obtain the control signal V_{ref} for controlling the fine compensation device.

At operation S203, the fine compensation device is adjusted based on a modulated and converted control signal to enable the fine compensation device to output the continuously varying second electrical quantity. Specifically, the control signal V_{ref} is subjected to PWM to obtain a fine compensation execution signal, and the fine compensation execution signal is sent to an actuator inside the fine compensation device to adjust the fine compensation device, and the fine compensation device outputs the continuously varying second electrical quantity, thereby obtaining the desired voltage vector V_{ABCref}.

In the embodiment of the present disclosure, the control signal is determined based on a vector frequency-division control method using the desired voltage vector, the first electrical quantity output by the multi-phase parallel transformer, the output voltage of the fine compensation device, and the DC voltage output by the fine compensation device; the continuously varying second electrical quantity output by the fine compensation device is adjusted based on the control signal. This control method can quickly respond to instructions and perform frequency domain analysis and control on the instructions at each frequency, respectively, so as to realize precise point-to-point tracking for the instructions. It not only realizes high-precision output of the desired variable, but also facilitates resonance analysis and early warning, and dynamically changes a control gain at each frequency point, which avoids performing high-gain control at the resonance risk points of the system. The voltage smoothing adjustment variable, the fundamental impedance variable, the harmonic voltage adjustment variable and the harmonic impedance adjustment variable are selected by the desired voltage vector, which can realized continuous smooth adjustment, fundamental frequency impedance adjustment, harmonic voltage adjustment and harmonic impedance adjustment for the output voltage of the parallel transformer.

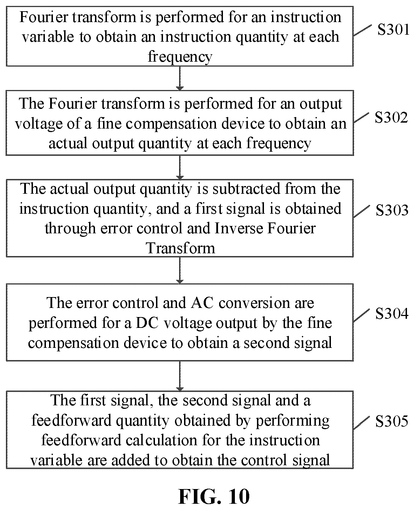

As illustrated in FIG. 10, performing the vector frequency-division control calculation on the instruction variable and the output voltage of the fine compensation device, and then combining the DC voltage control quantity of the fine compensation device to obtain the control signal, includes the following operations.

At operation S301, Fourier transform is performed for the instruction variable to obtain an instruction quantity at each frequency. In a specific embodiment, the instruction variable V_{abc-ref} is subjected to Positive Fourier transform to obtain instruction quantities at different voltage frequencies, such as V_{1ref}, V_{2ref}, V_{1href}, etc.

At operation S302, the Fourier transform is performed for the output voltage of the fine compensation device to obtain an actual output quantity at each frequency. Specifically, the output voltage V_{abc} of the fine compensation device is received, and the output voltage of the fine compensation device is subjected to the Positive Fourier transform to obtain actual output quantities at different voltage frequencies, such as V_{1abc}, V_{2abe}, V_{habc}, etc.

At operation S303, the actual output quantity is subtracted from the instruction quantity, and a first signal is obtained through error control and Inverse Fourier Transform. Specifically, after subtracting the actual output quantity from the instruction quantity, error control is performed by G₁(s), G₂(s),...Gₙ(s) controllers at each frequency, and the controller output quantity of the controller at each frequency is then subjected to the Inverse Fourier transform to obtain the first signal.

At operation S304, the error control and AC conversion are performed for a DC voltage and a DC instruction voltage of the fine compensation device to obtain a second signal. Specifically, the DC source in the fine compensation device outputs the DC voltage U_{DC}, such as that from the ultracapacitor, the battery, or various DC power sources. The DC voltage U_{DC} and the DC instruction voltage U_{DCref} are subject to the error control through a G_{DC(s)} controller, and then are subject to the AC conversion to obtain the second signal, which is the DC control quantity U_{dc}.

At operation S305, the first signal, the second signal and a feedforward quantity obtained by performing feedforward calculation for the instruction variable are added to obtain the control signal. Specifically, the obtained first signal, the obtained second signal, and the feedforward quantity obtained by performing the feedforward calculation Gᵥ(s) for the instruction variable V_{abc-ref} are added to obtain the control signal V_{ref}.

In the embodiment of the present disclosure, after performing the Fourier transform on the instruction variable and the output voltage of the fine compensation device, followed by the error control, and then applying the Inverse Fourier transform, the control signal is obtained by adding this result to the feedforward quantity derived from the feedforward calculation for the instruction variable. A speed of frequency domain analytical control of the instruction is improved at each frequency, a tracking speed of the instruction is improved, and a precision and accuracy of the control signal are improved.

Although the exemplary embodiments and the advantages thereof have been described in detail herein, various alterations, substitutions and modifications may be made to the embodiments by those skilled in the art without departing from the gist of the present disclosure and the scope of protection as defined by the appended claims, and such alterations and modifications all fall into the scope defined by the appended claims. As for other examples, it may be easily appreciated by those skilled in the art that the sequence of the process steps may be changed without departing from the protection scope of the present disclosure.

[**00111]** In addition, the scope, to which the present disclosure is applied, is not limited to the process, mechanism, manufacture, material composition, means, methods and steps of the specific embodiments described in the present specification. Those skilled in the art should readily appreciate from the disclosure of the present disclosure that the process, mechanism, manufacture, material composition, means, methods and steps currently existing or to be developed in future, which perform substantially the same functions or achieve substantially the same results as that in the corresponding embodiments described in the present disclosure, may be applied according to the present disclosure. Therefore, the appended claims of the present disclosure are intended to include these process, mechanism, manufacture, material composition, means, methods and steps within the scope of protection thereof.

## Claims

1. An interconnecting power supply transformer, configured to: transmit electric energy from a first line and a second line of a power grid line to a power supply port, and interconnect the first line and the second line and mutually transmit the electric energy between the first line and the second line at a specified power, wherein the interconnecting power supply transformer comprises a multi-phase parallel transformer, a multi-phase series transformer and a plurality of safety protection auxiliary adjustment devices, wherein
a head end of a primary side of the multi-phase parallel transformer is connected to the first line, and tail ends of the primary side of the multi-phase parallel transformer are connected together to form a first neutral point;
a secondary side of the multi-phase parallel transformer has at least one power supply winding and a plurality of asymmetric windings, wherein the power supply winding is connected to the power supply port, and each of the plurality of asymmetric windings, through its respective switch bridge arm module, is interconnected with switch bridge arm modules corresponding to asymmetric windings of secondary sides of neighboring phases of the multi-phase parallel transformer to obtain a first electrical quantity, and the first electrical quantity is coupled to a primary side of the multi-phase series transformer through a secondary side of a corresponding phase of the multi-phase series transformer, so as to be connected to the second line; and
each of the plurality of safety protection auxiliary adjustment devices is connected in series between the first line and the second line, and is configured to: perform power quality barrier and fault isolation on the first line and the second line, dynamically adjust a interconnecting power between the first line and the second line, and perform line fault protection on the multi-phase series transformer.

2. The interconnecting power supply transformer of claim 1, wherein at least one of the head end of the primary side or the tail end of the primary side of the multi-phase parallel transformer has a plurality of taps, the plurality of taps are configured to stabilize and adjust a voltage of the power supply winding of the secondary side of the multi-phase parallel transformer.

3. The interconnecting power supply transformer of claim 1, wherein the asymmetric winding comprises a plurality of taps, and the multi-phase parallel transformer comprises a plurality of voltage adjustment devices, the plurality of voltage adjustment devices comprises a plurality of switch bridge arm modules, and a number of the plurality of switch bridge arm modules is same as a number of asymmetric windings of the multi-phase parallel transformer, wherein
each of the plurality of taps is connected to an input of the switch bridge arm module;
the voltage adjustment device is configured to control a bridge arm switch state of the switch bridge arm module to selectively conduct the plurality of taps in a preset mode, such that the plurality of asymmetric windings are respectively interconnected with asymmetric windings of the neighboring phases of the multi-phase parallel transformer in a continuous, intermittent, normally open or normally closed electrical operation mode to obtain the first electrical quantity, wherein the preset mode comprises normally open, normally closed, and intermittent conduction of windings at a preset frequency.

4. The interconnecting power supply transformer of claim 1, wherein each primary side of the multi-phase series transformer is connected in series between the first line and the second line; and
an input of a secondary side of the multi-phase series transformer is connected with asymmetric windings of two neighboring phases of the multi-phase parallel transformer, and an asymmetric winding of a present phase of the multi-phase parallel transformers through the switch bridge arm modules, sequentially; and an output of a switch bridge arm module corresponding to the asymmetric winding of the present phase of the multi-phase parallel transformer is connected to a second neutral point.

5. The interconnecting power supply transformer of claim 1, wherein the secondary side of the series multi-phase transformer further comprises a redundant reactor, the redundant reactor is connected to both ends of a winding of the secondary side of the multi-phase series transformer through a first switch, and the redundant reactor is configured to limit a current, magnitude of which exceeds a fifth threshold value for a duration greater than a first threshold value during a normal operation of the multi-phase series transformer.

6. The interconnecting power supply transformer of claim 1, wherein a third switch is connected in parallel at both ends of the primary side of each phase of the multi-phase series transformer, and the safety protection auxiliary adjustment device comprises a first controllable switch, a second controllable switch, a third controllable switch, a fourth controllable switch, a first capacitor, a second capacitor, a first inductor, a first resistor, a second switch and an overvoltage absorber, wherein
when the power supply transformer is operating normally, the third switch is turned off, the second controllable switch and the fourth controllable switch are turned on, the first controllable switch, the third controllable switch and the second switch are turned off, and the safety protection auxiliary adjustment device presents a harmonic high-impedance characteristic, which blocks harmonics higher than a second threshold value from passing through a transformer and a line, the harmonics higher than the second threshold value generate an adverse effect on a power supply system,
when a short circuit fault occurs on the first line and the second line to which the power supply transformer is connected, the first controllable switch, the third controllable switch and the fourth controllable switch are turned on, the second controllable switch and the second switch are turned off, the safety protection auxiliary adjustment device presents a high-impedance state in a preset bandwidth, which shunts a line voltage exceeding a third threshold value onto the safety protection auxiliary adjustment device, or limits a fault current within a fourth threshold value; and the safety protection auxiliary adjustment device is configured to protect the multi-phase series transformer from the voltage exceeding the third threshold value and the current exceeding the fourth threshold value due to a line short circuit;
when the multi-phase parallel transformer and the multi-phase series transformer are not operating, the third switch is turned on, the third controllable switch is turned on, the second controllable switch, the fourth controllable switch and the second switch are turned off, the first controllable switch operates at a specific conduction angle or on-off frequency, and the safety protection auxiliary adjustment device directly interconnects two lines, and presents an adjustable reactance state of an inductive reactance, a capacitive reactance, an impedance or a combination of the inductive reactance, the capacitive reactance and the impedance; and the safety protection auxiliary adjustment device is configured to adjust the interconnecting power; and
when the safety protection auxiliary adjustment device stops operating or only needs the multi-phase series transformer and the multi-phase parallel transformer to operate, the third switch is turned off, the second switch is turned on, and the first controllable switch, the second controllable switch, the third controllable switch and the fourth controllable switch are turned off.

7. The interconnecting power supply transformer of claim 1, further comprising: a fine compensation device, a first bypass switch and a second bypass switch, wherein
an input of the fine compensation device is connected to an output of the secondary side of the multi-phase series transformer through the first bypass switch and the second bypass switch; the fine compensation device comprises a four-quadrant converter with an Alternating Current (AC) to Direct Current (DC) conversion function or an AC to AC conversion function; and the fine compensation device is configured to output a continuously varying second electrical quantity, wherein the second electrical quantity, after being superimposed with the first electrical quantity, is coupled to the primary side of the multi-phase series transformer through the secondary side of the corresponding phase of the multi-phase series transformer when the first second bypass switch and second bypass switch are in an off-state.

8. The interconnecting power supply transformer of claim 1, further comprising:
a grounding device, configured to ground the first neutral point, wherein the grounding device comprises a grounding reactor and a grounding resistor in series, and a reactance value of the grounding reactor and a resistance value of the grounding resistor are adjustable.

9. A method for controlling an interconnecting power supply transformer, wherein the interconnecting power supply transformer is configured as the power supply transformer of claim 7 or 8, the method comprising:
adjusting, by the multi-phase parallel transformer, an on-off state of a plurality of switch bridge arm modules in a continuous, intermittent, or normally open or normally closed electrical operation mode based on a three-phase input voltage, and outputs the first electrical quantity;
adjusting the fine compensation device to enable the fine compensation device to output the continuously varying second electrical quantity; and
applying a voltage vector generated by superimposing the first electrical quantity and the second electrical quantity onto a winding of the secondary side of the multi-phase series transformer, and superimposing, by a winding of the primary side of the multi-phase series transformer, the voltage vector coupled from the winding of the secondary side onto the three-phase input voltage to form a voltage difference between the first line and the second line, such that the mutual transmission of the electric energy between the interconnecting lines at the specified power is implemented by adjusting the voltage difference.

10. The method of claim 9, wherein adjusting the fine compensation device to enable the fine compensation device to output the continuously variable second electrical quantity comprises:
determining an instruction variable for adjusting the fine compensation device based on a desired voltage vector and the first electrical quantity output by the multi-phase parallel transformer;
performing vector frequency-division control calculation on the instruction variable and an output voltage of the fine compensation device, and then combining a Direct Current (DC) voltage control quantity of the fine compensation device to obtain a control signal; and
adjusting the fine compensation device based on a modulated and converted control signal, to enable the fine compensation device to output the continuously varying second electrical quantity.

11. The method of claim 10, wherein performing the vector frequency-division control calculation on the instruction variable and the output voltage of the fine compensation device, and then combining the DC voltage control quantity of the fine compensation device to obtain the control signal, comprises:
performing Fourier transform on the instruction variable to obtain an instruction quantity at each frequency;
performing the Fourier transform on the output voltage of the fine compensation device to obtain an actual output quantity at each frequency;
subtracting the actual output quantity from the instruction quantity, and obtaining a first signal through error control and inverse Fourier transform;
performing the error control and Alternating Current (AC) conversion on an DC voltage and an DC instruction voltage of the fine compensation device to obtain a second signal; and
adding the first signal, the second signal and a feedforward quantity obtained by performing feedforward calculation for the instruction variable, to obtain the control signal.

12. The method of claim 10, wherein the desired voltage vector comprises a voltage smoothing adjustment variable, a fundamental impedance variable, a harmonic voltage adjustment variable and a harmonic impedance adjustment variable.
